(19) Europäisches Patentamt
European Patent Office
Office européen des brevets

(11) EP 2 899 800 A1

(12) EUROPEAN PATENT APPLICATION
published in accordance with Art. 153(4) EPC

(43) Date of publication:
29.07.2015 Bulletin 2015/31

(51) Int Cl.:
H01M 14/00 (2006.01)   H01L 31/04 (2014.01)

(21) Application number: 13839193.3

(22) Date of filing: 18.09.2013

(86) International application number:
PCT/JP2013/075129

(87) International publication number:
WO 2014/046117 (27.03.2014 Gazette 2014/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 18.09.2012   JP 2012204696
25.01.2013   JP 2013012408
22.08.2013   JP 2013172711

(71) Applicants:
• Tokyo University Of Science
Educational Foundation Administrative
Organization
Shinjuku-ku
Tokyo 162-8601 (JP)
• Toppan Printing Co., Ltd.
Tokyo 110-0016 (JP)

(72) Inventors:
• WATANABE, Naoya
Tokyo 162-8601 (JP)
• KUDO, Tomohiro
Tokyo 162-8601 (JP)
• MUROYA, Syougo
Tokyo 162-8601 (JP)
• NOZAWA, Kouya
Tokyo 162-8601 (JP)
• OZAWA, Hironobu
Tokyo 162-8601 (JP)
• ARAKAWA, Hironori
Tokyo 162-8601 (JP)
• SHIBAYAMA, Naoyuki
Tokyo 110-0016 (JP)

(74) Representative: TBK
Bavariaring 4-6
80336 München (DE)

(54) ANTIPOLE FOR DYE-SENSITIZATION SOLAR CELL, AND DYE-SENSITIZATION SOLAR CELL

(57) A counter electrode for a dye sensitized solar cell (20) includes a conductive layer (21); and a contact preventing layer (23) which is formed of an insulating substance, and is formed on one surface of the conductive layer (21).

FIG. 1

EP 2 899 800 A1

## Description

TECHNICAL FIELD

The present invention relates to a counter electrode for a dye sensitized solar cell, and more specifically, to a counter electrode for a dye sensitized solar cell by which a problem such as a short circuit is not likely to occur, and incident light is efficiently reflected, and a dye sensitized solar cell including the counter electrode for a dye sensitized cell.

Priority is claimed on Japanese Patent Application No. 2012-204696, filed September 18, 2012, Japanese Patent Application No. 2013-012408, filed January 25, 2013, and Japanese Patent Application No. 2013-172711, filed August 22, 2013, the contents of which are incorporated herein by reference.

BACKGROUND ART

A dye sensitized solar cell has been developed by Gratzel et al. of Switzerland, and has high photoelectric conversion efficiency and low manufacturing cost compared to other general batteries. As the dye sensitized solar cell, for example, a configuration disclosed in Non-Patent Document 1 or Patent Document 1 has been known.

A dye sensitized solar cell disclosed in Patent Document 1 is formed by laminating a photoelectrode for a dye sensitized solar cell (hereinafter, simply referred to as a "photoelectrode") configured by a translucent substrate in which a transparent conductive layer is formed on a plastic translucent support (a base material) and a photoelectric conversion layer (an oxide semiconductor porous film supporting a sensitizing dye) arranged on the translucent substrate, an electrolyte portion, and a counter electrode.

When the photoelectrode and the counter electrode are in contact with each other and are thereby conducted, a short circuit occurs, and the dye sensitized solar cell does not function as a cell. In order to prevent this, for example, in Patent Documents 1 and 2, a spacer is disposed on a circumference of a space in which an electrolyte portion is filled. Therefore, the photoelectrode and the counter electrode are prevented from being in contact with each other.

In addition, in the dye sensitized solar cell, incident light is not collected completely by the photoelectrode, and the incident light which is not able to be collected by the photoelectrode reaches the electrolyte portion and the counter electrode. Part of the light is reflected by an inner portion of the dye sensitized solar cell and re-incident on the photoelectrode. However, most of the light is not re-incident, and is changed into thermal energy or the like, and thus is not effectively used.

PRIOR ART DOCUMENTS

PATENT DOCUMENTS

[Patent Document 1] Japanese Unexamined Patent Application, First Publication No. 2007-18862
[Patent Document 2] Japanese Unexamined Patent Application, First Publication No. 2010-225295

NON-PATENT DOCUMENTS

[Non-Patent Document 1] Nature, 353, pp.737-740, 1991

SUMMARY OF THE INVENTION

PROBLEMS TO BE SOLVED BY THE INVENTION

However, in fact, it is not easy to completely prevent the photoelectrode and the counter electrode from being in contact with each other by the spacer described above. For example, when the base material of the photoelectrode has flexibility, a portion on which the spacer is not disposed is bent by flexing or the like. Therefore, the photoelectrode may be in contact with the counter electrode. In addition, even when the base material of the photoelectrode does not have the flexibility, stress is applied to a center portion of the dye sensitized solar cell when the base material is thin, an area is wide, and the like. Therefore, the photoelectrode may be bent so as to be in contact with the counter electrode.

Since the size of the spacer is set in consideration of such a possibility, the size of the spacer easily increases in general. When the height of the spacer (a length of the dye sensitized solar cell in a thickness direction) increases, a filled amount of the electrolyte portion increases. Therefore, manufacturing cost increases. In addition, since resistance of the dye sensitized solar cell depends on a distance between the photoelectrode and the counter electrode, improvement of a cell performance is impeded.

In the dye sensitized solar cell, a catalyst layer such as platinum is used for the counter electrode. Therefore, it is possible to improve a reflection ratio of the counter electrode by forming the catalyst layer to be thick. However, a problem such as an increase in manufacturing time and an increase in cost occurs.

In addition, when a thickness of the electrolyte portion is reduced, the distance between the photoelectrode and the counter electrode can be reduced. Therefore, use efficiency of the light is improved, but when distance between the photoelectrode and the counter electrode is excessively reduced, the photoelectrode and the counter electrode are easily in contact with each other. When the photoelectrode and the counter electrode are in contact with each other, the photoelectrode and the counter electrode are conducted, and a short circuit occurs. Therefore, the dye sensitized solar cell does not function as a cell.

In consideration of the circumstances described above, an object of the present invention is to provide an electrode for a sensitized solar cell by which it is possible to prevent a short circuit between a photoelectrode and the counter electrode, and it is possible to arrange the counter electrode to be close to the photoelectrode.

Another object of the present invention is to provide a dye sensitized solar cell by which a short circuit between the photoelectrode and the counter electrode is not likely to occur even when the cell is bent or the like.

In addition, still another object of the present invention is to provide a counter electrode for a dye sensitized solar cell with a high reflection ratio which is able to be manufactured at low cost.

Yet another object of the present invention is to provide a dye sensitized solar cell by which light which is not collected by the photoelectrode can be efficiently re-incident on the photoelectrode.

MEANS FOR SOLVING THE PROBLEMS

A counter electrode for a dye sensitized solar cell according to a first aspect of the present invention includes: a conductive layer; and a contact preventing layer which is formed of an insulating substance and is formed on one surface of the conductive layer.

It is preferable that a thickness of the contact preventing layer be 0.05 $\mu$m to 100 $\mu$m.

It is preferable that the insulating substance be metal oxide. In the counter electrode for a dye sensitized solar cell according to the first aspect of the present invention, it is preferable that the metal oxide be particles of which the average particle diameter is 10 nm to 5 $\mu$m.

In addition, it is preferable that the contact preventing layer have a mesoporous structure.

A dye sensitized solar cell of a second aspect of the present invention includes: a photoelectrode including: a substrate; and a photoelectric conversion layer formed on the substrate by using a photoelectric conversion material in which a sensitizing dye is supported on a functional semiconductor; the counter electrode for a dye sensitized solar cell of the first aspect of the present invention; and an electrolyte portion filled between the photoelectrode and the counter electrode, in which a surface on which the contact preventing layer is formed is arranged to face the photoelectrode.

A dye sensitized solar cell of a third aspect of the present invention includes: a photoelectrode including: a substrate; and a photoelectric conversion layer formed on the substrate by using a photoelectric conversion material in which a sensitizing dye is supported on a functional semiconductor; the counter electrode for a dye sensitized solar cell of the first aspect of the present invention; and an electrolyte portion impregnated in the photoelectric conversion layer and the contact preventing layer, in which a surface on which the contact preventing layer is formed is arranged to face the photoelectrode.

It is preferable that a thickness of the electrolyte portion be greater than 0 and less than or equal to 30 $\mu$m.

A counter electrode for a dye sensitized solar cell of a fourth aspect of the present invention includes: a conductive layer; and an insulating reflective layer formed on one surface of the conductive layer.

It is preferable that the reflective layer have a mesoporous structure.

It is preferable that the reflective layer be formed of metal oxide particles.

It is preferable that an average particle diameter of the particles be 10 nm to 5 $\mu$m.

A dye sensitized solar cell of a fifth aspect of the present invention includes: a photoelectrode including: a substrate; and a photoelectric conversion layer formed on the substrate by using a photoelectric conversion material in which a sensitizing dye is supported on a functional semiconductor; the counter electrode for a dye sensitized solar cell of the fourth aspect of the present invention; and an electrolyte portion filled between the photoelectrode and the counter electrode, in which a surface on which the reflective layer is formed is arranged to face the photoelectrode.

It is preferable that a thickness of the electrolyte portion be greater than 0 and less than or equal to 30 $\mu$m.

A dye sensitized solar cell of a sixth aspect of the present invention includes: a photoelectrode including: a substrate; and a photoelectric conversion layer formed on the substrate by using a photoelectric conversion material in which a sensitizing dye is supported on a functional semiconductor; the counter electrode for a dye sensitized solar cell of the fourth aspect of the present invention; and an electrolyte portion impregnated in the photoelectric conversion layer and the reflective layer, in which a surface on which the reflective layer is formed is arranged to face the photoelectrode.

Effects of Invention

According to the counter electrode for a dye sensitized solar cell of the first aspect of the present invention, it is possible to prevent a short circuit between the photoelectrode and the counter electrode, and it is possible to arrange the counter electrode and the photoelectrode to be close to each other.

In addition, according to the dye sensitized solar cell of the second aspect and the third aspect of the present invention, a short circuit between the photoelectrode and the counter electrode is not likely to occur even when bending or the like occurs. According to the counter electrode for a dye sensitized solar cell of the fourth aspect of the present invention, the counter electrode for a dye sensitized solar cell with a high reflection ratio can be manufactured at low cost.

In addition, according to the dye sensitized solar cell of the fifth aspect and the sixth aspect of the present invention, the light which is not collected by the photoelectrode can be efficiently re-incident on the photoelectrode.

BRIEF DESCRIPTION OF THE DRAWINGS

FIG. 1 is a cross-sectional view schematically illustrating a cell configuring a dye sensitized solar cell according to an embodiment of the present invention.
FIG. 2 is a cross-sectional view schematically illustrating a cell configuring a dye sensitized solar cell of an embodiment of the present invention.

EMBODIMENTS FOR CARRYING OUT THE INVENTION

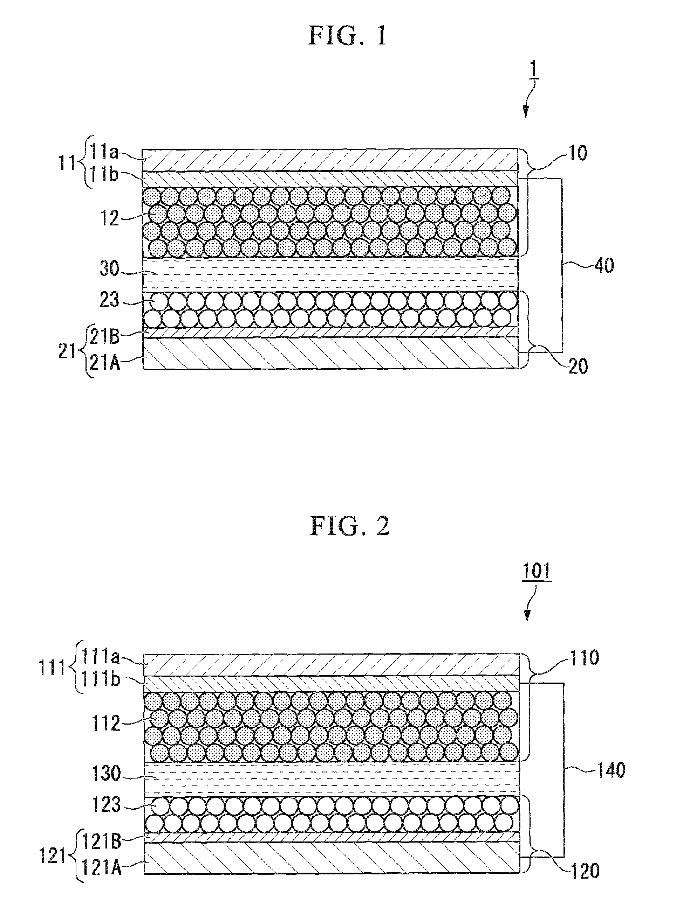

Hereinafter, a first embodiment of the present invention will be described with reference to FIG. 1.

FIG. 1 is a cross-sectional view schematically illustrating a cell configuring a dye sensitized solar cell of a first embodiment of the present invention. In the cell 1, a photoelectrode 10 and a counter electrode for a dye sensitized solar cell (hereinafter, simply referred to as a "counter electrode") 20 of the first embodiment of the present invention are arranged to face each other by sandwiching an electrolyte portion 30 therebetween, and the photoelectrode 10 and the counter electrode 20 are electrically connected by wiring 40.

The photoelectrode 10 functions as a negative counter electrode in the cell 1, and includes a translucent substrate (a substrate) 11 in which a transparent conductive layer 11b is formed on one surface of a translucent base material 11a, and a photoelectric conversion layer 12 formed on the transparent conductive layer 11b.

As the base material 11a, various materials such as glass and plastic can be used. As a plastic base material 11a, from a viewpoint of translucence, heat resistance, chemical resistance, and the like, for example, a plate-shaped or film-shaped cyclo-olefin-based polymer, a plate-shaped or film-shaped acryl urea-based polymer, a plate-shaped or film-shaped polyester, a plate-shaped or film-shaped polyethylene naphthalate, and the like are preferably used. When plastic is used as the base material 11a, it is possible to apply flexibility to the photoelectrode 10. Therefore, it is possible to flex or curl the photoelectrode 10.

As the transparent conductive layer 11b, for example, composite oxides of indium tin oxide (ITO), tin oxide doped with fluorine (FTO), and the like can be used.

The photoelectric conversion layer 12 is formed of a known photoelectric conversion material in which a sensitizing dye is supported on a functional semiconductor. As the functional semiconductor, for example, an oxide semiconductor such as $TiO_2$, SnO, ZnO, $WO_3$, $Nb_2O_5$, $In_2O_3$, $ZrO_2$, $Ta_2O_5$, and $TiSrO_3$; a sulfide semiconductor such as CdS, ZnS, $In_2S$, PbS, $Mo_2S$, $WS_2$, $Sb_2S_3$, $Bi_2S_3$, $ZnCdS_2$, and $CuS_2$; metal chalcogenide such as CdSe, $In_2Se_2$, $WSe_2$, PbSe, and CdTe; and an element semiconductor such as GaAs, Si, Se, and InP, and the like are included, and for example, a composite body including two or more substances thereof such as a composite body of SnO and ZnO, and a composite body of $TiO_2$ and $Nb_2O_5$ can be used. In addition, a type of semiconductor is not limited thereto, and two or more types can be mixed to be used.

Among them, oxides of Ti, Zn, Sn, and Nb are preferable, and $TiO_2$ (titania) is especially preferable.

As a material forming the functional semiconductor, a material of which the average particle diameter is 10 nm to 5 $\mu$m can be preferably used. In addition, a material of which particle diameters are different from each other may be mixed, and particles having a single particle diameter may be used.

The sensitizing dye is not limited to a dye exhibiting sensitization action, and can include an Ru complex such as an N3 complex, an N719 complex (an N719 dye), an Ru terpyridine complex (a black dye), and an Ru diketonate complex; an organic dye such as a coumarin-based dye, a merocyanine-based dye, and a polyene-based dye; a metal porphyrin-based dye or a phthalocyanine dye, and the like. Among them, the Ru complex is preferable. Since the N719 dye and the black dye have a wide absorption spectrum in a visible light region, the N719 dye and the black dye are especially preferable.

The N719 dye is a compound shown by $(RuL_2(NCS)_2 \cdot 2TBA)$, the black dye is a compound shown by $(RuL'_1(NCS)_3 \cdot 2TBA)$. However, L is 4,4'-dicarboxy-2,2'-bipyridine, L' is 4,4',4"-tetra-carboxy-2,2',2"-terpyridine, and TBA is a tetrabutyl ammonium cation. The dyes may be independently used, or may be used by mixing two or more types of dyes.

The counter electrode 20 functions as a positive electrode in the cell 1. The counter electrode 20, for example, includes a conductive layer 21 formed by supporting a catalyst layer 21B which is formed of a substance having a catalytic function reducing electrolyte, for example, metal such as platinum, a conductive polymer, carbon, and the like on a support 21A which is formed of a conductive metal oxide such as ITO and FTO or metal, and a contact preventing layer 23 formed on the conductive layer 21. A structure of the conductive layer 21 is not limited thereto, and the support is optional insofar as sufficient strength and a sufficient sealing performance are obtained. Alternatively, it is possible to configure a structure of only the support by configuring the support using a substance having the catalytic function.

Thus, the conductive layer 21 of the first embodiment of the present invention is not limited to a specific configuration thereof insofar as a reduction function of the electrolyte portion 30 is performed, and in FIG. 1, as an example, a configuration including the conductive support 21A, and the catalyst layer 21B formed on one surface of the support 21A is illustrated.

The contact preventing layer 23 including an insulating substance is formed on a surface of the catalyst layer 21B which configures a surface facing the electrolyte portion 30 and the photoelectrode 10 (hereinafter, referred to as a "facing surface") among the conductive layer 21, and coats the catalyst layer 21B. As the insulating material forming the contact preventing layer 23, various insulating bodies such as metal oxide or a resin can be used.

As the metal oxide, substantially the same materials as that of the functional semiconductor used for the photoelectric conversion layer can be used. Among them, oxides of Ti, Nb, and Zr such as $TiO_2$, $Nb_2O_5$, and $ZrO_2$, $SiO_2$, and the like are preferable, and titania is more preferable.

As the resin, for example, an acrylic resin, a styrene resin, and the like have excellent resistance to the electrolyte, and are preferable.

It is preferable that a thickness of the contact preventing layer 23 be a certain thickness, for example, greater than or equal to 50 nm (0.05 $\mu$m) from a viewpoint of reliably preventing the photoelectrode 10 and the counter electrode 20 from being in contact with each other. Further, it is more preferable that the thickness of the contact preventing layer 23 be greater than or equal to 100 nanometers (nm). In addition, it is preferable that the thickness of the contact preventing layer 23 be less than or equal to 100 $\mu$m from a viewpoint of thinning the cell. Furthermore, it is more preferable that the thickness of the contact preventing layer 23 be less than or equal to 30 $\mu$m from a viewpoint of a cell performance.

Since the contact preventing layer 23 has a mesoporous structure, a net-like structure, or the like, fluid, fine substances, or the like are able to permeate in the contact preventing layer 23. It is preferable that the structure be the mesoporous structure, and it is preferable that a roughness factor shown by surface plane view area be greater than or equal to 50-fold and less than or equal to 10000-fold. The electrolyte portion 30 is able to reach the catalyst layer 21B through the contact preventing layer 23 in a thickness direction of the cell, and the photoelectric conversion layer 12 is not in contact with the conductive layer 21 due to the contact preventing layer 23 even when the photoelectrode 10 is deformed by bending or the like.

The electrolyte portion 30 may be any one of liquid, solid, a solidified body, and an ordinary temperature melting salt. The thickness of the electrolyte portion 30 may be suitably set. In the dye sensitized solar cell of the first embodiment of the present invention, since the photoelectrode 10 and the conductive layer 21 are prevented from being in contact with each other by the contact preventing layer 23, an amount of the electrolyte portion 30 can be set to a minimum. Therefore, by setting the thickness of the electrolyte portion 30 to be extremely thin, for example, approximately 1 $\mu$m, a resistance value of the dye sensitized solar cell decreases, and the performance can be improved.

In addition, as the electrolyte portion, a cobalt complex may be used. Since metal corrosion is not likely to occur in a case of using the cobalt complex compared to a case of using iodine, it is possible to use metal wiring or the like in an inner portion of the dye sensitized solar cell.

The photoelectrode 10 and the counter electrode 20 are separately arranged such that a forming surface of the photoelectric conversion layer 12 of the photoelectrode 10 faces the counter electrode 20, and the electrolyte portion 30 is arranged between the photoelectrode 10 and the counter electrode 20. Furthermore, when the transparent conductive layer 11b of the photoelectrode 10 and the counter electrode 20 are electrically connected by the wiring 40, the cell 1 is completed.

In the cell 1 using the counter electrode 20 of the first embodiment of the present invention configured as described above, the contact preventing layer 23 is disposed on the catalyst layer 21B facing the photoelectrode 10. For this reason, even when one or both of the photoelectrode 10 and the counter electrode 20 are bent, and the photoelectrode 10 and the counter electrode 20 are partially close to each other, the photoelectrode 10 and the conductive layer 21 are preferably prevented from being in contact with each other by the contact preventing layer 23, a short circuit is reliably prevented. Therefore, even when an area of the cell increases, or the cell is flexed, the dye sensitized solar cell is able to stably function as a cell without the occurrence of the short circuit.

In addition, since the short circuit is preferably prevented by the contact preventing layer 23, it is not necessary that a distance between the photoelectrode 10 and the counter electrode 20 be set to be large in consideration of safety. Therefore, the thickness of the electrolyte portion 30 is set to be a minimum, and it is possible to reduce manufacturing cost. In addition, by arranging the photoelectrode 10 and the counter electrode 20 to be closer to each other, diffusion resistance of the electrolyte portion decreases, and thereby improving the cell performance.

In the first embodiment of the present invention, it is preferable that the contact preventing layer be formed of an insulating material having a white color-based hue such as white or whitish grey. In this manner, since light which is not absorbed by the photoelectrode is reflected by the contact preventing layer, and is re-incident on the photoelectrode, it is possible to improve a usage rate of the light. At the same time, when the thickness of the electrolyte portion is thin, light absorbed by the electrolyte portion decreases, and it is possible to allow more reflected light to reach the photoelectrode.

Hereinafter, a second embodiment of the present invention will be described with reference to FIG. 2. FIG. 2 is a cross-sectional view schematically illustrating a cell 101 configuring a dye sensitized solar cell of a second embodiment of the present invention. In the cell 101, a photoelectrode 110 and a counter electrode for a dye sensitized solar cell (hereinafter, simply referred to as a "counter electrode") 120 of the second embodiment of the present invention are arranged to face each other by sandwiching an electrolyte portion 130 therebetween, and the photoelectrode 110 and the counter electrode 120 are electrically connected by wiring 140.

In the second embodiment of the present invention, the same materials and the same configurations as that of the first embodiment can be adopted except that a reflective layer 123 is used in the counter electrode 120.

Hereinafter, in particular, the counter electrode of the second embodiment of the present invention will be described in detail.

The photoelectrode 110 functions as a negative counter electrode in the cell 101, and includes a translucent substrate (a substrate) 111 in which a transparent conductive layer 111b is formed on one surface of a translucent base material 111a, and a photoelectric conversion layer 112 formed on the transparent conductive layer 111b.

As the base material 111a, the same materials as that of the base material 11a of the first embodiment described above can be adopted. When plastic is used as the base material 111a, it is possible to apply flexibility to the photoelectrode 110, and it is possible to flex or curl the photoelectrode 110.

As the transparent conductive layer 111b, similar to the transparent conductive layer 11b of the first embodiment described above, for example, composite oxides of indium tin oxide (ITO), tin oxide doped with fluorine (FTO), and the like can be used.

The photoelectric conversion layer 112 is formed of a known photoelectric conversion material in which a sensitizing dye is supported on a functional semiconductor. As the functional semiconductor, the same materials as that of the photoelectric conversion layer 12 of the first embodiment described above can be adopted.

As a material forming the functional semiconductor, a material of which the average particle diameter is 10 nm to 5 $\mu$m can be preferably used. In addition, a material of which particle diameters are different from each other may be mixed, and particles having a single particle diameter may be used.

As the sensitizing dye, since the same materials as that of the sensitizing dye of the first embodiment described above can be adopted, the detailed description will be omitted.

The counter electrode 120 functions as a positive electrode in the cell 101. The counter electrode 120, for example, includes a conductive layer 121 formed by supporting a catalyst layer 121B which is formed of a substance having a catalytic function reducing electrolyte, for example, metal such as platinum, a conductive polymer, carbon, and the like on a support 121A which is formed of a conductive metal oxide such as ITO and FTO or metal, and a reflective layer 123 formed on the conductive layer 121. A structure of the conductive layer 121 is not limited thereto, and the support is optional insofar as sufficient strength and a sufficient sealing performance are obtained. Alternatively, it is possible to configure a structure of only the support by configuring the support using a substance having the catalytic function.

Thus, the conductive layer 121 of the second embodiment of the present invention is not limited to a specific configuration thereof insofar as a reduction function of the electrolyte portion 130 is performed, and in FIG. 2, as an example, a configuration including the conductive support 121A, and the catalyst layer 121B formed on one surface of the support 121A is illustrated.

In a case where carbon is selected as a primary material of the catalyst layer 121B, when the catalyst layer is formed to have a porous structure, since a contact area between the counter electrode 120 and the electrolyte portion 130 increases, and it is possible to preferably improve catalytic activity. In addition, by adding oxide fine particles into the carbon, it is possible to improve strength of the catalyst layer.

The reflective layer 123 including an insulating substance is formed on a surface of the catalyst layer 121B which configures a surface facing the electrolyte portion 130 and the photoelectrode 110 (hereinafter, referred to as a "facing surface") among the conductive layer 121, and coats the catalyst layer 121B. As the insulating material forming the reflective layer 123, various insulating bodies such as metal oxide or a resin can be used.

In the reflective layer 123, an integral reflection ratio of the light having a wavelength of 450 nanometers is greater than or equal to 30%. Furthermore, in the second embodiment of the present invention, a case where a reflection wavelength in the reflective layer is 450 nanometers is described, but the reflection wavelength is not limited to 450 nanometers.

As the metal oxide, substantially the same materials as that of the functional semiconductor used for the photoelectric conversion layer can be used. Among them, oxides of Ti and Nb such as $TiO_2$ and $Nb_2O_5$, $SiO_2$, alumina, and the like are preferable, and titania is more preferable from a viewpoint of reflection characteristics.

As the resin, for example, an acrylic resin, a styrene resin, and the like have excellent resistance to the electrolyte, and thus are preferable.

It is preferable that a thickness of the reflective layer 123 be a certain thickness, for example, greater than or equal to 50 nm (0.05 $\mu$m) from a viewpoint of improving the reflection of the light. Further, it is more preferable that the thickness of the reflective layer 123 be greater than or equal to 100 nanometers (nm). In addition, it is preferable that the thickness of the reflective layer 123 be less than or equal to 100 $\mu$m from a viewpoint of thinning the cell. Furthermore, it is more preferable that the thickness of the reflective layer 123 be less than or equal to 30 $\mu$m from a viewpoint of a cell performance.

It is preferable that the average particle diameter of particles configuring the reflective layer 123 be greater than or equal to 10 nanometers. More preferably, the average particle diameter of the particles configuring the reflective layer 123 is greater than or equal to 100 nanometers.

In addition, it is preferable that the average particle diameter of the particles configuring the reflective layer 123 be less than or equal to 5 micrometers from a viewpoint of the reflection of the light and thinning. Furthermore, it is more preferable that the average particle diameter of the particles configuring the reflective layer 123 be less than or equal to 1 micrometer. In addition, by mixing particles with a different average particle diameter, it is possible to provide strength to a film.

Since the reflective layer 123 has a mesoporous structure, a net-like structure, or the like, fluid, fine substances, or the like are able to permeate in the reflective layer 123. It is preferable that the structure be the mesoporous structure, and it is preferable that a roughness factor shown by surface plane view area be greater than or equal to 500-fold and less than or equal to 10000-fold. The electrolyte portion 130 is able to reach the catalyst layer 121B through the reflective layer 123 in a thickness direction, and the photoelectric conversion layer 112 is not directly in contact with the conductive layer 121 to be conducted due to the reflective layer 123 even when the photoelectrode 110 is deformed by bending or the like.

The electrolyte portion 130 may be any one of liquid, solid, a solidified body, and an ordinary temperature melting salt.

A thickness of the electrolyte portion 130 may be suitably set, and in the dye sensitized solar cell of the second embodiment of the present invention, since the photoelectrode 110 and the conductive layer 121 are prevented from being in contact with each other to be conducted by the reflective layer 123, an amount of the electrolyte portion 130 can be set to a minimum.

Therefore, by setting the thickness of the electrolyte portion 130 to be extremely thin, for example, approximately 1 $\mu$m, and a resistance value of the dye sensitized solar cell decreases, and the performance can be improved.

In addition, as the electrolyte portion, a cobalt complex may be used.

When the cobalt complex is used, since metal corrosion is not likely to occur compared to a case of using iodine, it is possible to use metal wiring or the like in an inner portion of the dye sensitized solar cell.

The photoelectrode 110 and the counter electrode 120 are separately arranged so that a forming surface of the photoelectric conversion layer 112 of the photoelectrode 110 faces the counter electrode 120, and the electrolyte portion 130 is arranged between the photoelectrode 110 and the counter electrode 120. Furthermore, when the transparent conductive layer 111b of the photoelectrode 110 and the counter electrode 120 are electrically connected by the wiring 140, the cell 101 is completed.

In the photoelectrode 110 of the cell 101 of the second embodiment of the present invention configured as described above, since the reflective layer 123 is disposed on the catalyst layer 121B facing the photoelectrode 110, light which is not collected by the photoelectrode 110 is efficiently reflected again toward the photoelectrode 110, and thereby improving use efficiency of incident light.

In addition, when the reflective layer 123 is formed of an insulating substance, it is possible to configure the counter electrode while considerably reducing the manufacturing cost without considerably decreasing the reflection ratio, compared to a case using platinum or the like.

Furthermore, when the reflective layer 123 is formed of the insulating substance, the photoelectrode 110 and the conductive layer 121 are preferably prevented from being in contact with each other by the reflective layer 123 even when one or both of the photoelectrode 110 and the counter electrode 120 are bent, and the photoelectrode 110 and the counter electrode 120 are partially close to each other, a short circuit is reliably prevented. Therefore, when the reflective layer 123 is formed of the insulating substance, the dye sensitized solar cell is able to stably function as a cell without the occurrence of the short circuit even when an area of the cell increases, or the cell is flexed.

In addition, when the reflective layer 123 is formed of the insulating substance, since the short circuit is preferably prevented by the reflective layer 123, it is not necessary that a distance between the photoelectrode 110 and the counter electrode 120 be set to be large in consideration of safety. Therefore, the thickness of the electrolyte portion 130 is set to be a minimum, and it is possible to reduce the manufacturing cost. In addition, by arranging the photoelectrode 110 and the counter electrode 120 to be closer to each other, diffusion resistance of the electrolyte portion decreases, and thereby improving the cell performance. Furthermore, by setting the electrolyte portion to a minimum, light absorbed by the electrolyte portion decreases, and it is possible to increase light which is incident on the reflective layer 123 among light which is not collected. In addition, the light reflected by the reflective layer 123 is more efficiently incident on the photoelectrode 110.

Examples

The dye sensitized solar cell of the present invention will be further described by using Examples, but the present invention is not limited thereto.

Hereinafter, Example according to the dye sensitized solar cell of the first embodiment of the present invention including the contact preventing layer in the counter electrode will be described.

[Example 1]

(Preparation of Titania Semiconductor Particle Suspension Liquid)

56.8 g of tetraisopropyl orthotitanate was dropped into 200 mL of ion exchange water while being stirred, hydrolysis was completed by further performing the stirring for 1 hour after finishing the dropping, and thereby obtaining a precipitate of titanium hydroxide as a target. The precipitate was filtered by using filter paper, and was sufficiently washed by ion exchange water.

The precipitate was added to ion exchange water in which 5.8 g of tetramethyl ammonium hydroxide (TMAH) was dissolved, ion exchange water was further added thereto, and a total amount of a sample was set to 160 g.

The sample was subjected to heating and refluxing at 140°C for 4 hours, then a microcrystal was removed by a glass filter, and thereby obtaining a milky white translucent colloidal solution.

The obtained colloidal solution was moved to an airtight autoclave container, and was subjected to hydrothermal synthesis at 260°C for 8 hours. After the hydrothermal synthesis of the colloidal solution, a solvent of the colloidal solution was substituted by ethanol using an evaporator. Subsequently, the colloidal solution substituted by ethanol was subjected to an ultrasonic dispersion treatment, and ethanol suspension liquid [A] including anatase crystal type titania particles [A] of which the average particle diameter was 20 nm (the above operation is referred to as a "preparation operation of semiconductor particle suspension liquid") was obtained.

Furthermore, approximately a total amount of trimethylamine which was generated by decomposing TMAH was removed at the time of performing the operation of substituting the solvent of the colloidal solution by ethanol.

In the preparation operation of the semiconductor particle suspension liquid, ethanol suspension liquid [B] including anatase crystal type titania particles [B] of which the average particle diameter was 100 nm was obtained by the same manner as described above except that an added amount of TMAH was 1.5 g.

Furthermore, the ethanol suspension liquid was applied on slide glass by a doctor blade method and was dried, and an XRD pattern was measured with respect to the titania particles included in the ethanol suspension liquid [A] and the ethanol suspension liquid [B]. A half width was obtained from the obtained XRD pattern, and the average particle diameter was calculated by using a Scherrer equation ($D = K \times \lambda / \beta\cos\theta$). Furthermore, a crystal type of the titania particle was confirmed. Here, in the equation described above, D was a length of the crystallite, $\beta$ was a half width, $\theta$ was a diffraction angle, K was 0.94, and $\lambda$ was 1.5418.

Approximately 100% of crystal types of the titania particles [A] and the titania particles [B] were an anatase crystal type, and a rutile crystal type titania particle was not confirmed.

Furthermore, since an error in the Scherrer equation increased when the average particle diameter exceeded 50 nm, and the following method was used when the average particle diameter exceeded 50 nm. That is, the ethanol suspension liquid was applied on the slide glass by the doctor blade method and was dried, and then was imaged by using a SEM. An arithmetical mean of particle radii of particles obtained in an image was set to the average particle diameter.

(Preparation of Aqueous Paste for Forming Photoelectric Conversion Layer)

With respect to the ethanol suspension liquid [A] and the ethanol suspension liquid [B] which were two types of ethanol suspension liquid, a concentration of the titania particles was measured as follows. First, mass (W) of a crucible was weighed by an electronic balance. Subsequently, the ethanol suspension liquid was taken into the crucible, and total mass (W1) of the crucible and the ethanol suspension liquid was weighed. The crucible containing the ethanol suspension liquid therein was put into an electric furnace, and was maintained at 150°C for 2 hours, and thereby completely removing a solvent of the ethanol suspension liquid. Next, mass (W2) was weighed again, and the concentration of the titania particles was obtained from an equation {concentration of titania particle (wt%) = (W2 - W) / (W1 - W) × 100}.

Then, the titania particles [A] and the titania particles [B] were mixed so as to be 7:3 in a weight ratio on the basis of the concentration of the titania particles of each of the suspension liquid. A solvent of mixed liquid of the titania particles [A] and the titania particles [B] was substantially completely substituted by water using the evaporator again, and then was concentrated. According to the processes described above, finally, a paste for forming a photoelectric conversion layer [1] including water in which the concentration of the titania particles was 10 wt% as a medium was obtained.

The aqueous paste for forming a photoelectric conversion layer [1] was applied to a translucent substrate formed of an ITO/PEN (polyethylene naphthalate) substrate (manufactured by Ohjitoubi Co., Ltd.) having sheet resistance of 13 Ω/□ (□ indicates a dimensionless number) by the doctor blade method in order to form an action electrode region having a size of 0.5 cm × 0.5 cm. Subsequently, the aqueous paste for forming a photoelectric conversion layer [1] applied on the substrate was dried at a room temperature, and a coated film was formed, and then a flat press treatment was performed with respect to the coated film. In the flat press treatment, a Mini Test Press-10 (manufactured by Toyo Seiki Kogyo Co., Ltd.) was used. Conex Felt (manufactured by Dupont Co., Ltd.) of 5 mm, a pressure sensitive film ("Prescale", manufactured by Fuji Film Co., Ltd.), a translucent substrate, a fluorine release film, and Conex Felt (manufactured by Dupont Co., Ltd.) of 5 mm were sequentially laminated, and a laminated body having a layer configuration of "Conex Felt" / "the pressure sensitive film" / "the fluorine release film" / titania applied ITO-PEN substrate / "Conex Felt" from the top was obtained. The laminated body was pressed for 60 seconds while confirming actually measured press weight by the pressure sensitive film. The weight at this time was a pressure of 100 MPa. According to the method described above, a photoelectrode structure in which a functional semiconductor layer formed on the translucent substrate was obtained.

A film thickness of the functional semiconductor layer after being subjected to the flat press treatment was 6 μm. Correction in a significant figure of 4 digits was performed with respect to a cell effective area by using a digital microscope and a calibration scale. In addition, the film thickness was measured by using a stylus type surface shape measuring instrument DEKTAK (manufactured by ULVAC).

(Supporting of Sensitizing Dye and Preparation of Photoelectrode)

On the other hand, as a sensitizing dye, cis-bis(isothiocyanate)-bis(2,2'-dipyridyl-4,4'-dicarboxylic acid)-ruthenium(II)bis-tetrabutyl ammonium was dissolved in ethanol at a concentration of 0.2 mM and thereby obtaining a dye solution. The photoelectrode structure in which the functional semiconductor layer was formed was immersed in the dye solution for 24 hours, and a photoelectrode [1] including a photoelectric conversion layer in which the sensitizing dye was supported on the functional semiconductor layer was obtained.

(Preparation of Electrolyte Solution Used as Electrolyte Portion)

As an electrolyte solution, an acetonitrile solution in which electrolyte such as iodine, lithium iodide, 1,2-dimethyl-3-propyl imidazolium iodide, and t-butyl pyridine was dissolved was used. The electrolyte solution was prepared by being dissolved in acetonitrile in a nitrogen atmosphere so that each electrolyte concentration was 0.05 M, 0.1M, 0.6M, and 0.5 M.

(Preparation of Counter Electrode)

A Pt layer as a catalyst layer was formed on an FTO layer of FTO glass (manufactured by Nippon Sheet Glass Co., Ltd.) by using a sputtering method, and a conductive layer was prepared. A sputtering condition used in the preparation of the conductive layer was 60 W, 4 sccm of Ar gas, 0.6 Pa, and 1 min.

(Preparation of Paste for Forming Contact Preventing Layer)

5 wt% of ethyl cellulose and 5 wt% of α-terpinol were added to the ethanol suspension liquid [A], and particles as a material of a contact preventing layer were added so that a content ratio of the particles was 10 wt% and were dispersed. Subsequently, ethanol was removed by a rotary evaporator, and paste for forming a contact preventing layer was obtained.

The paste for forming a contact preventing layer including TiO$_2$ particles of which the average particle diameter was 400 nm as a material was applied on the Pt layer by using screen printing. Subsequently, by performing sintering at 520°C for 1 hour, the contact preventing layer having a mesoporous structure and a thickness of 6 $\mu$m was formed on the Pt layer, and a counter electrode was obtained.

An insulating spacer having a thickness of 30 $\mu$m, and the counter electrode were sequentially superposed on the photoelectrode [1] described above, and the electrolyte solution was injected into a space between the photoelectrode [1] and the counter electrode by a microsyringe, and thereby preparing a dye sensitized solar cell was.

Furthermore, a value of a particle diameter of the particle as the material of the contact preventing layer was a value after being sintered. As a calculation method of the average particle diameter of the particles as the material of the contact preventing layer, the same method as that of a section (the preparation operation of the semiconductor particle suspension liquid) described above was adopted.

(Performance Evaluation of Dye Sensitized Solar Cell)

While the obtained dye sensitized solar cell was irradiated with pseudo sunlight of AM 1.5 and 100 mW/cm$^2$ by using "Solar Simulator" (manufactured by Peccell Technologies, Inc.), I-V characteristics thereof were measured by using "2400-type Source Meter" (manufactured by KEITHLEY), values of a short circuit current, an open voltage, and a form factor ff were obtained, and thereby calculating photoelectric conversion efficiency by using the values in the following Expression (1).

$$\text{Expression (1); photoelectric conversion efficiency } (\%) = [\text{short circuit current}$$

$$\text{value (mA/cm}^2) \times \text{open voltage value (V)} \times \{\text{form factor ff / incident light (100}$$

$$\text{mW/cm}^2)\}] \times 100$$

[Example 2]

Paste for forming a contact preventing layer including TiO$_2$ particles of which the average particle diameter was 400 nm as a material was applied on a Pt layer by using screen printing. Subsequently, by sintering the paste applied on the Pt layer at 150°C for 1 hour, a counter electrode including a contact preventing layer of which the film thickness was 6 $\mu$m on the Pt layer was obtained.

The other conditions were identical to that of Example 1.

[Example 3]

Paste for forming a contact preventing layer including TiO$_2$ particles of which the average particle diameter was 100 nm as a material was applied on a Pt layer by using screen printing. Subsequently, by sintering the paste applied on the Pt layer at 520°C for 1 hour, a counter electrode including a contact preventing layer of which the film thickness was 6 $\mu$m on the Pt layer was obtained.

The other conditions were identical to that of Example 1.

[Example 4]

Paste for forming a contact preventing layer including TiO$_2$ particles of which the average particle diameter was 100 nm as a material was applied on a Pt layer by using screen printing. Subsequently, by sintering the paste applied on the Pt layer at 150°C for 1 hour, a counter electrode including a contact preventing layer of which the film thickness was 6 $\mu$m on the Pt layer was obtained.

The other conditions were identical to that of Example 1.

[Example 5]

Paste for forming a contact preventing layer including TiO$_2$ particles of which the average particle diameter was 20 nm as a material was applied on a Pt layer by using screen printing. Subsequently, by sintering the paste applied on the Pt layer at 520°C for 1 hour, a counter electrode including a contact preventing layer of which the film thickness was 6 $\mu$m on the Pt layer was obtained.

The other conditions were identical to that of Example 1.

[Example 6]

Paste for forming a contact preventing layer including $TiO_2$ particles of which the average particle diameter was 20 nm as a material was applied on a Pt layer by using screen printing. Subsequently, by sintering the paste applied on the Pt layer at 150°C for 1 hour, a counter electrode including a contact preventing layer of which the film thickness was 6 $\mu$m on the Pt layer was obtained.

The other conditions were identical to that of Example 1.

[Example 7]

Paste for forming a contact preventing layer including $TiO_2$ particles of which the average particle diameter was 400 nm as a material was applied on a Pt layer by using screen printing. Subsequently, by sintering the paste applied on the Pt layer at 520°C for 1 hour, a counter electrode including a contact preventing layer of which the film thickness was 15 $\mu$m on the Pt layer was obtained.

The other conditions were identical to that of Example 1.

[Example 8]

Paste for forming a contact preventing layer including $TiO_2$ particles of which the average particle diameter was 400 nm as a material was applied on a Pt layer by using screen printing. Subsequently, by sintering the paste applied on the Pt layer at 520°C for 1 hour, a counter electrode including a contact preventing layer of which the film thickness was 3 $\mu$m on the Pt layer was obtained.

The other conditions were identical to that of Example 1.

[Comparative Example 1]

A dye sensitized solar cell of Comparative Example 1 was prepared in the same procedure as that of Example 1 except that a contact preventing layer was not disposed.

Results of Examples 1 to 8 and Comparative Example 1 were shown in Table 1.

[Table 1]

| | COUNTER ELECTRODE | PARTICLE DIAMETER | FILM THICKNESS OF CONTACT PREVENTING LAYER | CONDITION FOR FORMING CONTACT PREVENTING LAYER | PHOTOELECTRIC CONVERSION LAYER | CURRENT mA/cm$^2$ | VOLTAGE V | FF - | CONVERSION EFFICIENCY % |
|---|---|---|---|---|---|---|---|---|---|
| EXAMPLE 1 | FTO | 400 nm | 6 $\mu$m | 520°C | 6 $\mu$m | 11.4 | 0.79 | 0.72 | 6.5 |
| EXAMPLE 2 | | | | 150°C | | 10.8 | 0.79 | 0.72 | 6.2 |
| EXAMPLE 3 | | 100 nm | | 520°C | | 10.6 | 0.80 | 0.73 | 6.1 |
| EXAMPLE 4 | | | | 150°C | | 11.8 | 0.77 | 0.65 | 5.9 |
| EXAMPLE 5 | | 20 nm | | 520°C | | 10.7 | 0.78 | 0.72 | 5.9 |
| EXAMPLE 6 | | | | 150°C | | 10.5 | 0.77 | 0.71 | 5.7 |
| EXAMPLE 7 | | 400 nm | 15 $\mu$m | 520°C | | 15.0 | 0.76 | 0.68 | 7.8 |
| EXAMPLE 8 | | | 3 $\mu$m | | | 11.3 | 0.78 | 0.69 | 6.0 |
| COMPARATIVE EXAMPLE 1 | | - | - | - | | 10.3 | 0.76 | 0.69 | 5.4 |

[Example A1]

A dye sensitized solar cell was prepared in the same procedure as that of Example 1 except that a Ti substrate having a thickness of 40 $\mu$m was used instead of the FTO glass.

[Example A2]

A dye sensitized solar cell was prepared in the same procedure as that of Example 2 except that a Ti substrate having a thickness of 40 $\mu$m was used instead of the FTO glass.

[Example A3]

A dye sensitized solar cell was prepared in the same procedure as that of Example 3 except that a Ti substrate having a thickness of 40 $\mu$m was used instead of the FTO glass.

[Example A4]

A dye sensitized solar cell was prepared in the same procedure as that of Example 4 except that a Ti substrate having a thickness of 40 $\mu$m was used instead of the FTO glass.

[Example A5]

A dye sensitized solar cell was prepared in the same procedure as that of Example 5 except that a Ti substrate having a thickness of 40 $\mu$m was used instead of the FTO glass.

[Example A6]

A dye sensitized solar cell was prepared in the same procedure as that of Example 6 except that a Ti substrate having a thickness of 40 $\mu$m was used instead of the FTO glass.

[Example A7]

A dye sensitized solar cell of Example A7 was prepared in the same procedure as that of Example A1 except that a contact preventing layer having a film thickness of 15 $\mu$m was formed on a Pt layer by adjusting an applied amount of paste for forming a contact preventing layer.

[Comparative Example A1]

A dye sensitized solar cell of Comparative Example A1 was prepared in the same procedure as that of Example A1 except that a contact preventing layer was not disposed.
Results of Examples A1 to A7 and Comparative Example A1 were shown in Table 2.

[Table 2]

| | COUNTER ELECTRODE | PARTICLE DIAMETER | FILM THICKNESS OF CONTACT PREVENTING LAYER | CONDITION FOR FORMING CONTACT PREVENTING LAYER | PHOTOELECTRIC CONVERSION LAYER | CURRENT mA/cm$^2$ | VOLTAGE V | FF - | CONVERSION EFFICIENCY % |
|---|---|---|---|---|---|---|---|---|---|
| EXAMPLE A1 | Ti | 400 nm | 6 $\mu$m | 520°C | 6 $\mu$m | 12.6 | 0.78 | 0.72 | 7.1 |
| EXAMPLE A2 | | | | 150°C | | 12.8 | 0.79 | 0.70 | 7.1 |
| EXAMPLE A3 | | 100 nm | | 520°C | | 12.4 | 0.77 | 0.70 | 6.7 |
| EXAMPLE A4 | | | | 150°C | | 11.3 | 0.78 | 0.66 | 5.8 |
| EXAMPLE A5 | | 20 nm | | 520 °C | | 11.9 | 0.78 | 0.66 | 6.1 |
| EXAMPLE A6 | | | | 150°C | | 12.4 | 0.77 | 0.64 | 6.1 |
| EXAMPLE A7 | | 400 nm | 15 $\mu$m | 520 °C | | 12.7 | 0.80 | 0.73 | 7.4 |
| COMPARATIVE EXAMPLE A1 | | - | - | - | | 10.3 | 0.78 | 0.58 | 4.7 |

[Example B1]

A dye sensitized solar cell was prepared in the same procedure as that of Example 2 except that an ITO/PEN (polyethylene naphthalate) substrate (manufactured by Ohjitoubi Co., Ltd.) having sheet resistance of 13 $\Omega/\square$ ($\Omega/cm^2$) was used instead of the FTO glass.

[Example B2]

A dye sensitized solar cell was prepared in the same procedure as that of Example 4 except that an ITO/PEN (polyethylene naphthalate) substrate (manufactured by Ohjitoubi Co., Ltd.) having sheet resistance of 13 $\Omega/\square$ ($\Omega/cm^2$) was used instead of the FTO glass.

[Example B3]

A dye sensitized solar cell was prepared in the same procedure as that of Example 6 except that an ITO/PEN (polyethylene naphthalate) substrate (manufactured by Ohjitoubi Co., Ltd.) having sheet resistance of 13 $\Omega/\square$ ($\Omega/cm^2$) was used instead of the FTO glass.

[Comparative Example B1]

A dye sensitized solar cell of Comparative Example B1 was prepared in the same procedure as that of Example B1 except that a contact preventing layer was not disposed.
Results of Examples B1 to B3 and Comparative Example B1 were shown in

[Table 3]

| | COUNTER ELECTRODE | PARTICLE DIAMETER | FILM THICKNESS OF CONTACT PREVENTING LAYER | CONDITION FOR FORMING CONTACT PREVENTING LAYER | PHOTOELECTRIC CONVERSION LAYER | CURRENT mA/cm$^2$ | VOLTAGE V | FF- | CONVERSION EFFICIENCY % |
|---|---|---|---|---|---|---|---|---|---|
| EXAMPLE B1 | ITO/PEN | 400 nm | 6 $\mu$m | 150°C | 6 $\mu$m | 13.3 | 0.79 | 0.69 | 7.2 |
| EXAMPLE B2 | | 100 nm | | 150°C | | 12.9 | 0.78 | 0.67 | 6.7 |
| EXAMPLE B3 | | 20 nm | | 150°C | | 11.3 | 0.80 | 0.69 | 6.2 |
| COMPARATIVE EXAMPLE B1 | | - | - | - | | 10.8 | 0.80 | 0.72 | 6.2 |

[Example C1]

A dye sensitized solar cell was prepared in the same procedure as that of Example 1 except that a stainless (SUS304) substrate having a thickness of 50 $\mu$m was used instead of the FTO glass.

[Example C2]

A dye sensitized solar cell was prepared in the same procedure as that of Example 2 except that a SUS304 substrate having a thickness of 50 $\mu$m was used instead of the FTO glass.

[Example C3]

A dye sensitized solar cell was prepared in the same procedure as that of Example 3 except that a SUS304 substrate having a thickness of 50 $\mu$m was used instead of the FTO glass.

[Example C4]

A dye sensitized solar cell was prepared in the same procedure as that of Example 4 except that a SUS304 substrate having a thickness of 50 $\mu$m was used instead of the FTO glass.

[Example C5]

A dye sensitized solar cell was prepared in the same procedure as that of Example 5 except that a SUS304 substrate having a thickness of 50 $\mu$m was used instead of the FTO glass.

[Example C6]

A dye sensitized solar cell was prepared in the same procedure as that of Example 6 except that a SUS304 substrate having a thickness of 50 $\mu$m was used instead of the FTO glass.

[Comparative Example C1]

A dye sensitized solar cell of Comparative Example C1 was prepared in the same procedure as that of Example C1 except that a contact preventing layer was not disposed.

Results of Examples C1 to C6 and Comparative Example C1 were shown in Table 4.

[Table 4]

| | COUNTER ELECTRODE | PARTICLE DIAMETER | FILM THICKNESS OF CONTACT PREVENTING LAYER | CONDITION FOR FORMING CONTACT PREVENTING LAYER | PHOTOELECTRIC CONVERSION LAYER | CURRENT mA/cm$^2$ | VOLTAGE V | FF - | CONVERSION EFFICIENCY % |
|---|---|---|---|---|---|---|---|---|---|
| EXAMPLE C1 | SUS | 400 nm | 6 $\mu$m | 520 °C | 6 $\mu$m | 12.8 | 0.77 | 0.72 | 7.1 |
| EXAMPLE C2 | | | | 150 °C | | 13.3 | 0.78 | 0.71 | 7.4 |
| EXAMPLE C3 | | 100 nm | | 520 °C | | 12.8 | 0.77 | 0.61 | 6.0 |
| EXAMPLE C4 | | | | 150 °C | | 13.1 | 0.78 | 0.71 | 7.2 |
| EXAMPLE C5 | | 20 nm | | 520 °C | | 12.5 | 0.78 | 0.57 | 5.5 |
| EXAMPLE C6 | | | | 150 °C | | 11.5 | 0.79 | 0.72 | 6.5 |
| COMPARATIVE EXAMPLE C1 | | - | - | - | | 11.2 | 0.74 | 0.66 | 5.5 |

EP 2 899 800 A1

[Example D1]

A dye sensitized solar cell was prepared in the same procedure as that of Example 1 except that paste for forming a contact preventing layer including $ZrO_2$ particles of which the average particle diameter was 100 nm as a material was used.

[Example D2]

A dye sensitized solar cell was prepared in the same procedure as that of Example 1 except that paste for forming a contact preventing layer including $SiO_2$ particles of which the average particle diameter was 20 nm as a material was used.

[Example D3]

A dye sensitized solar cell was prepared in the same procedure as that of Example 1 except that paste for forming a contact preventing layer including ITO particles of which the average particle diameter was 50 nm as a material was used.

[Example D4]

A dye sensitized solar cell was prepared in the same procedure as that of Example 1 except that paste for forming a contact preventing layer including antimony doped tin oxide (ATO) particles of which the average particle diameter was 50 nm as a material was used.

Results of Examples D1 to D4 were shown in Table 5.

[Table 5]

| | COUNTER ELECTRODE | PARTICLE TYPE | PARTICLE DIAMETER | FILM THICKNESS OF CONTACT PREVENTING LAYER | CONDITION FOR FORMING CONTACT PREVENTING LAYER | PHOTOELECTRIC CONVERSION LAYER | CURRENT mA/cm$^2$ | VOLTAGE V | FF - | CONVERSION EFFICIENCY % |
|---|---|---|---|---|---|---|---|---|---|---|
| EXAMPLE D1 | FTO | ZrO$_2$ | 100 nm | 6 μm | 520°C | 6 μm | 10.5 | 0.79 | 0.74 | 6.1 |
| EXAMPLE D2 | | SiO$_2$ | 20 nm | | | | 12.6 | 0.77 | 0.70 | 6.8 |
| EXAMPLE D3 | | ITO | 50 nm | | | | 12.2 | 0.78 | 0.75 | 7.2 |
| EXAMPLE D4 | | ATO | 50 nm | | | | 12.0 | 0.78 | 0.74 | 6.9 |

(Investigation of Occurrence or Non-Occurrence of Short Circuit by Bending Test of Cell)

[Example E1]

A dye sensitized solar cell of Example E1 was prepared in the same procedure as that of Example A1 except that a size of an action electrode region was 0.5 cm $\times$ 5.0 cm.

[Comparative Example E1]

A dye sensitized solar cell of Comparative Example E1 was prepared in the same procedure as that of Example E1 except that a contact preventing layer was not disposed.
In each of the cell of Example E1 and the cell of Comparative Example E1 which were prepared as described above, occurrence or non-occurrence of a short circuit of the cell was investigated by the following method.
One end of the cell in a longitudinal direction was fixed and horizontally maintained, the other end of the cell in the longitudinal direction was lifted by 1 cm, and the cell was maintained in a bent state. A solar cell performance of the cell in the bent state was measured, and thereby investigating the occurrence or non-occurrence of the short circuit of the cell.
Measurement results of the cells of Example E1 and Example 1 in the bent state, and measurement results of the cells of Comparative Example E1 and Comparative Example E1 in the bent state were shown in Table 6.

[Table 6]

| | COUNTER ELECTRODE | PARTICLE DIAMETER | FILM THICKNESS OF CONTACT PREVENTING LAYER | CONDITION FOR FORMING CONTACT PREVENTING LAYER | PHOTOELECTRIC CONVERSION LAYER | CURRENT mA/cm² | VOLTAGE V | FF- | CONVERSION EFFICIENCY % |
|---|---|---|---|---|---|---|---|---|---|
| EXAMPLE E1 | Ti | 400 nm | 6μm | 520°C | 6μm | 9.1 | 0.74 | 0.66 | 4.4 |
| MEASUREMENT RESULT IN BENT STATE (EXAMPLE E1) | | | - | - | | 9.1 | 0.74 | 0.66 | 4.4 |
| COMPARATIVE EXAMPLE E1 | Ti | 400 nm | - | - | 6μm | 8.2 | 0.72 | 0.64 | 4.2 |
| MEASUREMENT RESULT IN BENT STATE (COMPARATIVE EXAMPLE E1) | | | - | - | | 8.0 | 0.02 | 0.25 | 0.1 |

As shown in Table 1 to Table 5, in the dye sensitized solar cells of Examples including the contact preventing layer, conversion efficiency was improved compared to Comparative Examples in which the dye sensitized solar cell had the same configuration as that of Examples except that the contact preventing layer was not provided. Several reasons thereof were considered, and as a first reason, it was considered that a thickness of the electrolyte portion decreased by a thickness of the contact preventing layer compared to Comparative Examples in which a thickness of the electrolyte portion was 30 $\mu$m (approximately similar to the thickness of the spacer), and thereby improving a current value according to a decrease in electrical resistance. The first reason was assumed from the fact that in Example 7, in which the thickness of the contact preventing layer increased, had higher conversion efficiency than that of Example 1. As a second reason, it was considered that light which passed through the photoelectrode and reached the counter electrode was reflected by the contact preventing layer and was incident on the photoelectrode again, and thereby improving light utilization. The improvement of the light utilization due to the reflection of the light by the contact preventing layer was assumed from a fact that in Example 8, in which the contact preventing layer was thin, had higher conversion efficiency than that of Example 1.

In addition, as shown in Table 5, it was confirmed that the contact preventing layer was able to be preferably formed of a material other than $TiO_2$, and the contact preventing layer formed of the material other than $TiO_2$ was able to preferably function as a contact preventing layer.

Furthermore, as shown in Table 6, when the dye sensitized solar cell of Comparative Example E1 was measured in the bent state, the cell performance rapidly decreased. It was assumed that this was because the photoelectrode and the counter electrode were in contact with each other in an inner portion of the cell by bending the cell, and the short circuit occurred. In contrast, in Example E1, it was assumed that even when the cell was measured in the bent state, the cell performance was not changed, and the short circuit of the cell was reliably prevented by the contact preventing layer.

Furthermore, when the dye sensitized solar cell of Example E1 was bent in a thickness direction, the photoelectrode and the contact preventing layer were partially in contact with each other, and in this portion, the electrolyte portion was not substantially disposed between the photoelectrode and the contact preventing layer (the thickness of the electrolyte portion was approximately 0). In such a state, the electrolyte portion was inserted into a microgap between the photoelectric conversion layer and the contact preventing layer, and the cell functioned as a dye sensitized solar cell without any problem. According to this consideration, an electrolyte portion was sufficiently impregnated in the photoelectric conversion layer and the contact preventing layer, and thereby configuring the dye sensitized solar cell in which the photoelectrode and the contact preventing layer were in contact with each other over the entire surface and in which a layered electrolyte portion was not disposed between the photoelectrode and the contact preventing layer (the thickness of the electrolyte portion was approximately 0) on appearance. According to such a configuration, the dye sensitized solar cell which had strength with respect to flexing and preferably functioned even when the cell was disposed such that the bend state was maintained was able to be prepared.

Hereinafter, Examples according to the dye sensitized solar cell of the second embodiment of the present invention including the reflective layer in the counter electrode will be described.

[Example 9]

In Example 9, the same processes as that of Example 1 were performed except that the process of (Preparation of Paste for Forming Contact Preventing Layer) of Example 1 was changed into a process of (Preparation Paste for Forming Reflective Layer).

Hereinafter, (Preparation of Paste for Forming Reflective Layer) will be described.

(Preparation of Paste for Forming Reflective Layer)

5 wt% of ethyl cellulose and 5 wt% of $\alpha$-terpinol were added to the ethanol suspension liquid [A] described above, and particles as a material of a reflective layer were added such that a content ratio of the particles was 10 wt% and were dispersed. Subsequently, ethanol was removed by a rotary evaporator, and paste for forming a reflective layer was obtained.

The paste for forming a reflective layer including $TiO_2$ particles of which the average particle diameter was 400 nm as a material was applied on the Pt layer by using screen printing. Subsequently, by performing sintering at 520°C for 1 hour, the reflective layer having a mesoporous structure and a thickness of 6 $\mu$m was formed on the Pt layer, and a counter electrode was obtained.

A total reflection measurement using an integrating sphere of a wavelength of 450 nm and 550 nm was performed with respect to the counter electrode by using U-4100 (manufactured by Hitachi High Technologies), and an integral reflection ratio was obtained.

An insulating spacer having a thickness of 30 $\mu$m, and the counter electrode were sequentially superposed on the photoelectrode [1] described above, and the electrolyte solution was injected into a space between the photoelectrode [1] and the counter electrode by a microsyringe, and thereby preparing a dye sensitized solar cell.

Furthermore, a value of a particle diameter of the particle as the material of the reflective layer was a value after being sintered. As a calculation method of the average particle diameter of the particles as the material of the reflective layer, the same method as that of a section (the preparation operation of the semiconductor particle suspension liquid) described above was adopted.

(Performance Evaluation of Dye Sensitized Solar Cell)

Performance evaluation of the dye sensitized solar cell was performed in the same manner as that of Example 1.

While the obtained dye sensitized solar cell was irradiated with pseudo sunlight of AM 1.5 and 100 mW/cm$^2$ by using "Solar Simulator" (manufactured by Peccell Technologies, Inc.), I-V characteristics thereof were measured by using "2400-type Source Meter" (manufactured by KEITHLEY), values of a short circuit current, an open voltage, and a form factor ff were obtained, and thereby calculating photoelectric conversion efficiency by using the values in the following Expression (1).

$$\text{Expression (1); photoelectric conversion efficiency (\%)} = [\text{short circuit current}$$

$$\text{value (mA/cm}^2) \times \text{open voltage value (V)} \times \{\text{form factor ff / incident light (100}$$

$$\text{mW/cm}^2)\}] \times 100$$

[Example 10]

Paste for forming a reflective layer including TiO$_2$ particles of which the average particle diameter was 400 nm as a material was applied on a Pt layer by using screen printing. Subsequently, by sintering the paste applied on the Pt layer at 150°C for 1 hour, a counter electrode including a reflective layer of which a film thickness was 6 μm on the Pt layer was obtained.

The other conditions were identical to that of Example 9.

[Example 11]

Paste for forming a reflective layer including TiO$_2$ particles of which the average particle diameter was 100 nm as a material was applied on a Pt layer by using screen printing. Subsequently, by sintering the paste applied on the Pt layer at 520°C for 1 hour, a counter electrode including a reflective layer of which a film thickness was 6 μm on the Pt layer was obtained.

The other conditions were identical to that of Example 9.

[Example 12]

Paste for forming a reflective layer including TiO$_2$ particles of which the average particle diameter was 100 nm as a material was applied on a Pt layer by using screen printing. Subsequently, by sintering the paste applied on the Pt layer at 150°C for 1 hour, a counter electrode including a reflective layer of which a film thickness was 6 μm on the Pt layer was obtained.

The other conditions were identical to that of Example 9.

[Example 13]

Paste for forming a reflective layer including TiO$_2$ particles of which the average particle diameter was 20 nm as a material was applied on a Pt layer by using screen printing. Subsequently, by sintering the paste applied on the Pt layer at 520°C for 1 hour, a counter electrode including a reflective layer of which a film thickness was 6 μm on the Pt layer was obtained.

The other conditions were identical to that of Example 9.

[Example 14]

Paste for forming a reflective layer including TiO$_2$ particles of which the average particle diameter was 20 nm as a material was applied on a Pt layer by using screen printing. Subsequently, by sintering the paste applied on the Pt layer at 150°C for 1 hour, a counter electrode including a reflective layer of which a film thickness was 6 μm on the Pt layer was obtained.

The other conditions were identical to that of Example 9.

[Example 15]

Paste for forming a reflective layer including $TiO_2$ particles of which the average particle diameter was 400 nm as a material was applied on a Pt layer by using screen printing. Subsequently, by sintering the paste applied on the Pt layer at 520°C for 1 hour, a counter electrode including a reflective layer of which a film thickness was 15 μm on the Pt layer was obtained.

The other conditions were identical to that of Example 9.

[Example 16]

Paste for forming a reflective layer including $TiO_2$ particles of which the average particle diameter was 400 nm as a material was applied on a Pt layer by using screen printing. Subsequently, by sintering the paste applied on the Pt layer at 520°C for 1 hour, a counter electrode including a reflective layer of which a film thickness was 3 μm on the Pt layer was obtained.

The other conditions were identical to that of Example 9.

[Comparative Example 2]

A dye sensitized solar cell of Comparative Example 2 was prepared in the same procedure as that of Example 9 except that a reflective layer was not disposed. In Comparative Example 2, similar to Examples 9 to 16, the total reflection measurement using the integrating sphere of the wavelength of 450 nm and 550 nm was performed by using U-4100 (manufactured by Hitachi High Technologies), and the integral reflection ratio was obtained.

Results of Examples 9 to 16 and Comparative Example 2 were shown in Table 7.

[Table 7]

| | COUNTER ELECTRODE | PARTICLE DIAMETER | FILM THICK-NESS OF RE-FLECTIVE LAYER | CONDITION FOR FORM-ING REFLEC-TIVE LAYER | PHOTOELECTRIC CONVERSION LAYER | CURRENT mA/cm$^2$ | VOLTAGE V | FF - | CONVERSION EFFICIENCY % | INTEGRAL RE-FLECTION RA-TIO % | |
|---|---|---|---|---|---|---|---|---|---|---|---|
| | | | | | | | | | | 450 nm | 550 nm |
| EXAMPLE 9 | FTO | 400 nm | 6 $\mu$m | 520 °C | 6 $\mu$m | 11.4 | 0.79 | 0.72 | 6.5 | 86.9 | 88.8 |
| EXAMPLE 10 | | | | 150°C | | 10.8 | 0.79 | 0.72 | 6.2 | 59.3 | 54.5 |
| EXAMPLE 11 | | 100 nm | | 520°C | | 10.6 | 0.80 | 0.73 | 6.1 | 66.5 | 59.3 |
| EXAMPLE 12 | | | | 150°C | | 11.8 | 0.77 | 0.65 | 5.9 | 51.3 | 43.8 |
| EXAMPLE 13 | | 20 nm | | 520 °C | | 10.7 | 0.78 | 0.72 | 5.9 | 28.5 | 29.3 |
| EXAMPLE 14 | | | | 150°C | | 10.5 | 0.77 | 0.71 | 5.7 | 29.6 | 29.6 |
| EXAMPLE 15 | | 400 nm | 15 $\mu$m | 520°C | | 15.0 | 0.76 | 0.68 | 7.8 | 76.4 | 75.0 |
| EXAMPLE 16 | | | 3 $\mu$m | | | 11.3 | 0.78 | 0.69 | 6.0 | 87.5 | 90.6 |
| COMPARATIVE EXAMPLE 2 | | - | - | - | | 10.3 | 0.76 | 0.69 | 5.4 | 26.2 | 29.6 |

[Example A11]

A dye sensitized solar cell was prepared in the same procedure as that of Example 9 except that a Ti substrate having a thickness of 40 μm was used instead of the FTO glass.

[Example A12]

A dye sensitized solar cell was prepared in the same procedure as that of Example 10 except that a Ti substrate having a thickness of 40 μm was used instead of the FTO glass.

[Example A13]

A dye sensitized solar cell was prepared in the same procedure as that of Example 11 except that a Ti substrate having a thickness of 40 μm was used instead of the FTO glass.

[Example A 14]

A dye sensitized solar cell was prepared in the same procedure as that of Example 12 except that a Ti substrate having a thickness of 40 μm was used instead of the FTO glass.

[Example A15]

A dye sensitized solar cell was prepared in the same procedure as that of Example 13 except that a Ti substrate having a thickness of 40 μm was used instead of the FTO glass.

[Example A16]

A dye sensitized solar cell was prepared in the same procedure as that of Example 14 except that a Ti substrate having a thickness of 40 μm was used instead of the FTO glass.

[Example A17]

A dye sensitized solar cell of Example A17 was prepared in the same procedure as that of Example A15 except that a reflective layer having a film thickness of 15 μm was formed on a Pt layer by adjusting an applied amount of paste for forming a reflective layer.

[Comparative Example A2]

A dye sensitized solar cell of Comparative Example A2 was prepared in the same procedure as that of Example A11 except that a reflective layer was not disposed. Furthermore, in Examples A11 to A17 and Comparative Example A2, a sputtering condition for forming a catalyst layer was 60 W, 4 sccm of Ar gas, 0.6 Pa, and 1 min.
Results of Examples A11 to A17 and Comparative Example A2 were shown in Table 8.

[Table 8]

| | COUNTER ELECTRODE | PARTICLE DIAMETER | FILM THICK-NESS OF RE-FLECTIVE LAYER | CONDITION FOR FORM-ING REFLEC-TIVE LAYER | PHOTOELECTRIC CONVERSION LAYER | CURRENT mA/cm$^2$ | VOLTAGE V | FF- | CONVERSION EFFICIENCY % | INTEGRAL RE-FLECTION RA-TIO % | |
|---|---|---|---|---|---|---|---|---|---|---|---|
| | | | | | | | | | | 450 nm | 550 nm |
| EXAMPLE A11 | Ti | 400 nm | 6 $\mu$m | 520°C | 6$\mu$m | 12.6 | 0.78 | 0.72 | 7.1 | 79.1 | 77.3 |
| EXAMPLE A12 | | | | 150°C | | 12.8 | 0.79 | 0.70 | 7.1 | 62.4 | 58.3 |
| EXAMPLE A13 | | 100 nm | | 520°C | | 12.4 | 0.77 | 0.70 | 6.7 | 68.7 | 60.1 |
| EXAMPLE A14 | | | | 150°C | | 11.3 | 0.78 | 0.66 | 5.8 | 52.9 | 46.4 |
| EXAMPLE A15 | | 20 nm | | 520°C | | 11.9 | 0.78 | 0.66 | 6.1 | 41.9 | 50.6 |
| EXAMPLE A16 | | | | 150°C | | 12.4 | 0.77 | 0.64 | 6.1 | 34.0 | 38.0 |
| EXAMPLE A17 | | 400 nm | 15 $\mu$m | 520 °C | | 12.7 | 0.80 | 0.73 | 7.4 | 89.6 | 90.2 |
| COMPARATIVE EXAMPLE A2 | | - | - | - | | 10.3 | 0.78 | 0.58 | 4.7 | 62.9 | 67.6 |

[Example B11]

A dye sensitized solar cell was prepared in the same procedure as that of Example 10 except that an ITO/PEN (polyethylene naphthalate) substrate (manufactured by Ohjitoubi Co., Ltd.) having sheet resistance of 13 $\Omega/\square$ ($\Omega/cm^2$) was used instead of the FTO glass.

[Example B12]

A dye sensitized solar cell was prepared in the same procedure as that of Example 12 except that an ITO/PEN (polyethylene naphthalate) substrate (manufactured by Ohjitoubi Co., Ltd.) having sheet resistance of 13 $\Omega/\square$ ($\Omega/cm^2$) was used instead of the FTO glass.

[Example B13]

A dye sensitized solar cell was prepared in the same procedure as that of Example 14 except that an ITO/PEN (polyethylene naphthalate) substrate (manufactured by Ohjitoubi Co., Ltd.) having sheet resistance of 13 $\Omega/\square$ ($\Omega/cm^2$) was used instead of the FTO glass.

[Comparative Example B2]

A dye sensitized solar cell of Comparative Example B2 was prepared in the same procedure as that of Example B11 except that a reflective layer was not disposed.
Results of Examples B11 to B 13 and Comparative Example B2 were shown in Table 9.

[Table 9]

| | COUNTER ELECTRODE | PARTICLE DIAMETER | FILM THICK-NESS OF RE-FLECTIVE LAYER | CONDITION FOR FORM-ING REFLEC-TIVE LAYER | PHOTOELECTRIC CONVERSION LAYER | CURRENT mA/cm$^2$ | VOLTAGE V | FF - | CONVERSION EFFICIENCY % | INTEGRAL RE-FLECTION RA-TIO% | |
|---|---|---|---|---|---|---|---|---|---|---|---|
| | | | | | | | | | | 450 nm | 550 nm |
| EXAMPLE B11 | ITO/PEN | 400 nm | 6 $\mu$m | 150°C | 6 $\mu$m | 13.3 | 0.79 | 0.69 | 7.2 | 59.8 | 55.4 |
| EXAMPLE B12 | | 100 nm | | 150°C | | 12.9 | 0.78 | 0.67 | 6.7 | 51.3 | 45.1 |
| EXAMPLE B13 | | 20 nm | | 150°C | | 11.3 | 0.80 | 0.69 | 6.2 | 34.2 | 41.0 |
| COMPARATIVE EXAMPLE B2 | | - | - | - | | 10.8 | 0.80 | 0.72 | 6.2 | 44.9 | 38.5 |

[Example C11]

A dye sensitized solar cell was prepared in the same procedure as that of Example 9 except that a stainless (SUS304) substrate having a thickness of 50 $\mu$m was used instead of the FTO glass.

[Example C12]

A dye sensitized solar cell was prepared in the same procedure as that of Example 10 except that a SUS304 substrate having a thickness of 50 $\mu$m was used instead of the FTO glass.

[Example C13]

A dye sensitized solar cell was prepared in the same procedure as that of Example 11 except that a SUS304 substrate having a thickness of 50 $\mu$m was used instead of the FTO glass.

[Example C14]

A dye sensitized solar cell was prepared in the same procedure as that of Example 12 except that a SUS304 substrate having a thickness of 50 $\mu$m was used instead of the FTO glass.

[Example C15]

A dye sensitized solar cell was prepared in the same procedure as that of Example 13 except that a SUS304 substrate having a thickness of 50 $\mu$m was used instead of the FTO glass.

[Example C16]

A dye sensitized solar cell was prepared in the same procedure as that of Example 14 except that a SUS304 substrate having a thickness of 50 $\mu$m was used instead of the FTO glass.

[Comparative Example C2]

A dye sensitized solar cell of Comparative Example C2 was prepared in the same procedure as that of Example C11 except that a reflective layer was not disposed.

Results of Examples C11 to C16 and Comparative Example C2 were shown in Table 10. Furthermore, in Examples C11 to C16 and Comparative Example C2, a sputtering condition for forming a catalyst layer was 60 W, 4 sccm of Ar gas, 0.6 Pa, and 1 min.

[Table 10]

| | COUNTER ELECTRODE | PARTICLE DIAMETER | FILM THICKNESS OF REFLECTIVE LAYER | CONDITION FOUR FORMING REFLECTIVE LAYER | PHOTOELECTRIC CONVERSION LAYER | CURRENT mA/cm$^2$ | VOLTAGE V | FF- | CONVERSION EFFICIENCY % | INTEGRAL REFLECTION RATIO % | |
|---|---|---|---|---|---|---|---|---|---|---|---|
| | | | | | | | | | | 450 nm | 550 nm |
| EXAMPLE C11 | SUS | 400 nm | 6 $\mu$m | 520 °C | 6 $\mu$m | 12.8 | 0.77 | 0.72 | 7.1 | 77.3 | 74.7 |
| EXAMPLE C12 | | | | 150 °C | | 13.3 | 0.78 | 0.71 | 7.4 | 61.0 | 56.8 |
| EXAMPLE C13 | | 100 nm | | 520 °C | | 12.8 | 0.77 | 0.61 | 6.0 | 69.2 | 58.4 |
| EXAMPLE C14 | | | | 150 °C | | 13.1 | 0.78 | 0.71 | 7.2 | 56.0 | 48.0 |
| EXAMPLE C15 | | 20 nm | | 520 °C | | 12.5 | 0.78 | 0.57 | 5.5 | 28.0 | 32.9 |
| EXAMPLE C16 | | | | 150 °C | | 11.5 | 0.79 | 0.72 | 6.5 | 35.3 | 41.0 |
| COMPARATIVE EXAMPLE C2 | | - | - | - | | 11.2 | 0.74 | 0.66 | 5.5 | 61.0 | 65.8 |

[Example D11]

A dye sensitized solar cell was prepared in the same procedure as that of Example 9 except that paste for forming a reflective layer including $SiO_2$ particles of which the average particle diameter was 20 nm as a material was used.

Results of Example D11 were shown in Table 11.

[Table 11]

| | COUNTER ELECTRODE | PARTICLE TYPE | PARTICLE DIAMETER | FILM THICK-NESS OF RE-FLECTIVE LAYER | CONDITION FOR FORM-ING REFLEC-TIVE LAYER | PHOTOELEC-TRIC CONVER-SION LAYER | CURRENT mA/cm$^2$ | VOLTAGE V | FF - | CONVERSION EFFICIENCY % | INTEGRAL RE-FLECTION RA-TIO % | |
|---|---|---|---|---|---|---|---|---|---|---|---|---|
| | | | | | | | | | | | 450 nm | 550 nm |
| EXAMPLE D11 | FTO | SiO$_2$ | 20 nm | 6μm | 520 °C | 6 μm | 12.6 | 0.77 | 0.70 | 6.8 | 61.4 | 58.8 |

EP 2 899 800 A1

34

In the following Examples, a material of a catalyst layer was different from that described above.

[Example E11]

(Preparation of Carbon Paste)

The ethanol suspension liquid [A] was added to 0.2 g of carbon (0.129 g of carbon black and 0.071 g of porous carbon), and was mixed, and then an ethanol suspension liquid [C] was obtained by further adding ethanol thereto. An added amount of the ethanol suspension liquid [A] was added so that weight of titanium oxide particles contained in [A] was 10% with respect to weight of carbon. Furthermore, 0.33 g of ethyl cellulose with 10 cp and 1.54 g of $\alpha$-terpineol were added to the ethanol suspension liquid [C], and was stirred by using ultrasonic waves. Subsequently, ethanol was removed by a rotary evaporator, and carbon paste was obtained.

(Preparation of Catalyst Layer)

The carbon paste described above was applied on FTO glass by using screen printing. Subsequently, by performing sintering at 370°C for 30 minutes, a catalyst layer having a thickness of 8 $\mu$m was formed on the FTO glass as a support.

(Preparation of Counter Electrode)

Paste for forming a reflective layer including TiO$_2$ particles of which the average particle diameter was 400 nm as a material was applied on the catalyst layer described above by using screen printing. Subsequently, by performing sintering at 370°C for 30 minutes, a counter electrode including the catalyst layer and the reflective layer (a total film thickness of the catalyst layer and the reflective layer was 15 $\mu$m) on the FTO glass was obtained.
A dye sensitized solar cell was prepared in the same procedure as that of Example 9 except that the counter electrode described above was used.

[Comparative Example E2]

A dye sensitized solar cell of Comparative Example E2 was prepared in the same procedure as that of Example E11 except that a reflective layer was not disposed.

[Example F11]

(Preparation of Catalyst Layer)

A solution in which conductive polymer PEDOT:PSS were dispersed in toluene so that a weight ratio was 1% was applied on a FTO glass by using a spin coat method, and thereby forming a catalyst layer formed of conductive high polymer having a thickness of 100 nm was formed on the FTO glass.

(Preparation of Counter Electrode)

Paste for forming a reflective layer including TiO$_2$ particles of which the average particle diameter was 400 nm as a material was applied on the catalyst layer described above by using screen printing. Subsequently, by performing sintering at 150°C for 30 minutes, a counter electrode including the catalyst layer with a thickness of 6 $\mu$m on the FTO glass was obtained.
A dye sensitized solar cell was prepared in the same procedure as that of Example 9 except that the counter electrode described above was used.

[Comparative Example F2]

A dye sensitized solar cell of Comparative Example F2 was prepared in the same procedure as that of Example F11 except that a reflective layer was not disposed.
Results of Examples E11 and F11, and Comparative Examples E2 and F2 were shown in Table 12.

[Table 12]

| | COUNTER ELECTRODE | PARTICLE TYPE | PARTICLE DIAMETER | FILM THICKNESS OF REFLECTIVE LAYER | CONDITION FOR FORMING REFLECTIVE LAYER | PHOTO ELECTRIC CONVERSION LAYER | CURRENT mA/cm$^2$ | VOLTAGE V | FF- | CONVERSION EFFICIENCY % | INTEGRAL REFLECTION RATIO % | |
|---|---|---|---|---|---|---|---|---|---|---|---|---|
| | | | | | | | | | | | 450 nm | 550 nm |
| EXAMPLE E11 | FTO | TiO$_2$ | 400 nm | 7 $\mu$m | 370 °C | 6 $\mu$m | 17.0 | 0.72 | 0.72 | 8.8 | 71.0 | 69.1 |
| COMPARATIVE EXAMPLE E2 | FTO | TiO$_2$ | 400 nm | - | - | 6 $\mu$m | 15.0 | 0.72 | 0.72 | 7.8 | 1.2 | 1.2 |
| EXAMPLE F11 | FTO | TiO$_2$ | 400 nm | 6 $\mu$m | 150 °C | 6 $\mu$m | 6.5 | 0.68 | 0.68 | 3.0 | 68.0 | 65.1 |
| COMPARATIVE EXAMPLE F2 | FTO | TiO$_2$ | 400 nm | - | - | 6 $\mu$m | 6.0 | 0.68 | 0.68 | 2.8 | 10.0 | 11.0 |

As shown in Table 7 to Table 12, in the reflective layers of the Examples, an integral reflection ratio without degradation was exhibited compared to Comparative Examples in which the dye sensitized solar cell had the same configuration as that of Examples except that the reflective layer was not provided. A reflection ratio of the reflective layer tended to be improved as a particle diameter of an insulating substance increased, and when the average particle diameter was greater than or equal to 100 nm, the reflection ratio was a value approximately greater than or equal to that of a platinum catalyst layer of Comparative Example.

In the dye sensitized solar cells of the respective Examples including the reflective layer, conversion efficiency was improved compared to Comparative Examples in which the dye sensitized solar cell had the same configuration as that of Examples except that the reflective layer was not provided. It was considered that the reason that the conversion efficiency was improved in Examples was because of multiple effects such as improvement in light utilization for which light which passed through the photoelectrode and reached the counter electrode was reflected by the reflective layer and incident on the photoelectrode again, and a decrease in electrical resistance for which a thickness of the electrolyte portion decreased by a thickness of reflective layer compared to Comparative Examples of which a thickness of the electrolyte portion was 30 $\mu$m (approximately similar to the thickness of the spacer).

In addition, effects of the reflective layer were confirmed regardless of a type of support in which a conductive layer is formed. Furthermore, as shown in Table 11, it was confirmed that the reflective layer was able to be preferably formed of a material other than $TiO_2$. In addition, it was confirmed that the reflective layer formed of the material other than $TiO_2$ was able to function as a reflective layer.

Furthermore, when the dye sensitized solar cell of the present invention was bent in a thickness direction, the photoelectrode and the reflective layer were partially in contact with each other, and in this portion where the dye sensitized solar cell was bent, the electrolyte portion was not substantially disposed between the photoelectrode and the reflective layer (the thickness of the electrolyte portion was approximately 0). In such a state, the electrolyte portion was inserted into a microgap between the photoelectric conversion layer and the reflective layer, and the cell functioned as a dye sensitized solar cell without any problem. According to this consideration, an electrolyte portion was sufficiently impregnated in the photoelectric conversion layer and the reflective layer, and thereby configuring the dye sensitized solar cell in which the photoelectrode and the reflective layer were in contact with each other over the entire surface, and in which a layered electrolyte portion was not disposed between the photoelectrode and the reflective layer (the thickness of the electrolyte portion was approximately 0) on appearance. According to such a configuration, the dye sensitized solar cell which had strength with respect to flexing and preferably functioned even when the cell was disposed such that the bend state was maintained was able to be prepared.

As described above, the dye sensitized solar cell of the present invention has been described by using the embodiments and Examples, but the technical scope of the present invention is not limited to the embodiments and Examples described above, and a combination of constituent elements may be changed, each of the constituent elements may be various changed, or the constituent elements may be deleted within the scope of the present invention.

For example, in the dye sensitized solar cell of the first embodiment of the present invention, the photoelectrode may include a translucent substrate and a transparent conductive layer, and for example, the photoelectric conversion layer may be formed on a metal substrate. In this case, since light is not able to be introduced from the photoelectrode side, the counter electrode and the contact preventing layer may be formed of a material having light transparency.

For example, in each Example according to the dye sensitized solar cell of the second embodiment of the present invention described above, the reflective layer is formed by using the insulating metal oxide particles, but the reflective layer can be formed by using conductive particles including ITO, antimony doped tin oxide (ATO), $ZrO_2$, ZnO, and the like. In this case, an application of the reflective layer may be limited to suppression of flexing, and the reflective layer is formed while suppressing necking between the particles, and thereby forming the insulating reflective layer while using the conductive particles.

In addition, in the first embodiment and the second embodiment of the present invention, when a material other than Pt, for example, carbon, conductive polymer, or the like is used as the material of the catalyst layer, the insulating contact preventing layer or the insulating reflective layer is disposed on the catalyst layer, and thereby preparing the counter electrode and the cell.

DESCRIPTION OF REFERENCE NUMERAL

1, 101        cell (dye sensitized solar cell)
10, 110       photoelectrode for dye sensitized solar cell
11, 111       translucent substrate (substrate)
11a, 111a     base material
11b, 111b     transparent conductive layer

| 12, 112 | photoelectric conversion layer |
|---|---|
| 20, 120 | counter electrode for dye sensitized solar cell |
| 21, 121 | conductive layer |
| 23, 123 | contact preventing layer |

**Claims**

1. A counter electrode for a dye sensitized solar cell, comprising:

   a conductive layer; and
   a contact preventing layer which is formed of an insulating substance and is formed on one surface of the conductive layer.

2. The counter electrode for a dye sensitized solar cell according to Claim 1,
   wherein a thickness of the contact preventing layer is 0.05 $\mu$m to 100 $\mu$m.

3. The counter electrode for a dye sensitized solar cell according to Claim 1 or 2,
   wherein the insulating substance is metal oxide.

4. The counter electrode for a dye sensitized solar cell according to Claim 3,
   wherein the metal oxide is particles of which an average particle diameter is 10 nm to 5 $\mu$m.

5. The counter electrode for a dye sensitized solar cell according to any one of Claims 1 to 4,
   wherein the contact preventing layer has a mesoporous structure.

6. A dye sensitized solar cell, comprising:

   a photoelectrode including: a substrate; and a photoelectric conversion layer formed on the substrate by using a photoelectric conversion material in which a sensitizing dye is supported on a functional semiconductor;
   the counter electrode for a dye sensitized solar cell according to any one of Claims 1 to 5; and
   an electrolyte portion filled between the photoelectrode and the counter electrode,
   wherein a surface on which the contact preventing layer is formed is arranged to face the photoelectrode.

7. A dye sensitized solar cell, comprising:

   a photoelectrode including: a substrate; and a photoelectric conversion layer formed on the substrate by using a photoelectric conversion material in which a sensitizing dye is supported on a functional semiconductor;
   the counter electrode for a dye sensitized solar cell according to any one of Claims 1 to 5; and
   an electrolyte portion impregnated in the photoelectric conversion layer and the contact preventing layer,
   wherein a surface on which the contact preventing layer is formed is arranged to face the photoelectrode.

8. The dye sensitized solar cell according to Claim 6 or 7,
   wherein a thickness of the electrolyte portion is greater than 0 and less than or equal to 30 $\mu$m.

9. A counter electrode for a dye sensitized solar cell, comprising:

   a conductive layer; and
   an insulating reflective layer formed on one surface of the conductive layer.

10. The counter electrode for a dye sensitized solar cell according to Claim 9,
    wherein the reflective layer has a mesoporous structure.

11. The counter electrode for a dye sensitized solar cell according to Claim 9 or 10,
    wherein the reflective layer is formed of metal oxide particles.

12. The counter electrode for a dye sensitized solar cell according to Claim 11,
    wherein an average particle diameter of the particles is 10 nm to 5 $\mu$m.

**13.** A dye sensitized solar cell, comprising:

a photoelectrode including: a substrate; and a photoelectric conversion layer formed on the substrate by using a photoelectric conversion material in which a sensitizing dye is supported on a functional semiconductor; the counter electrode for a dye sensitized solar cell according to any one of Claims 9 to 12; and an electrolyte portion filled between the photoelectrode and the counter electrode, wherein a surface on which the reflective layer is formed is arranged to face the photoelectrode.

**14.** The dye sensitized solar cell according to Claim 13, wherein a thickness of the electrolyte portion is greater than 0 and less than or equal to 30 $\mu$m.

**15.** A dye sensitized solar cell, comprising:

a photoelectrode including: a substrate; and a photoelectric conversion layer formed on the substrate by using a photoelectric conversion material in which a sensitizing dye is supported on a functional semiconductor; the counter electrode for a dye sensitized solar cell according to any one of Claims 9 to 12; and an electrolyte portion impregnated in the photoelectric conversion layer and the reflective layer, wherein a surface on which the reflective layer is formed is arranged to face the photoelectrode.

# FIG. 1

# FIG. 2

## INTERNATIONAL SEARCH REPORT

| International application No. |
| --- |
| PCT/JP2013/075129 |

A. CLASSIFICATION OF SUBJECT MATTER
*H01M14/00*(2006.01)i, *H01L31/04*(2006.01)i

According to International Patent Classification (IPC) or to both national classification and IPC

B. FIELDS SEARCHED

Minimum documentation searched (classification system followed by classification symbols)
H01M14/00, H01L31/04

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2008-176993 A (Kyocera Corp.), 31 July 2008 (31.07.2008), paragraphs [0016] to [0139] (Family: none) | 1-15 |
| X | JP 2007-280761 A (Kyocera Corp.), 25 October 2007 (25.10.2007), paragraphs [0016] to [0122] (Family: none) | 1-15 |
| X | JP 2011-008956 A (Sumitomo Osaka Cement Co., Ltd.), 13 January 2011 (13.01.2011), Mode for carrying out the Invention (Family: none) | 1-15 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 31 October, 2013 (31.10.13) | 12 November, 2013 (12.11.13) |

| Name and mailing address of the ISA/ Japanese Patent Office | Authorized officer |
| --- | --- |
| Facsimile No. | Telephone No. |

Form PCT/ISA/210 (second sheet) (July 2009)

41

## INTERNATIONAL SEARCH REPORT

| | International application No. |
|---|---|
| | PCT/JP2013/075129 |

C (Continuation).   DOCUMENTS CONSIDERED TO BE RELEVANT

| Category* | Citation of document, with indication, where appropriate, of the relevant passages | Relevant to claim No. |
|---|---|---|
| X | WO 2011/086869 A1  (Sharp Corp.),<br>21 July 2011 (21.07.2011),<br>paragraphs [0024] to [0172]<br>& US 2012/0325285 A1    & EP 2525437 A1 | 1-15 |
| X | JP 2002-237335 A  (Hitachi Maxell, Ltd.),<br>23 August 2002 (23.08.2002), | 1-4,6-9,<br>11-15 |
| A | paragraphs [0028] to [0061]<br>(Family: none) | 5,10 |

Form PCT/ISA/210 (continuation of second sheet) (July 2009)

**EP 2 899 800 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012204696 A
- JP 2013012408 A
- JP 2013172711 A
- JP 2007018862 A
- JP 2010225295 A

### Non-patent literature cited in the description

- *Nature,* 1991, vol. 353, 737-740